# EUROPÄISCHE PATENTSCHRIFT

(11) **EP 0 698 055 B1**
(45) Veröffentlichungstag und Bekanntmachung des Hinweises auf die Patenterteilung: **03.12.1997**
(21) Anmeldenummer: 94916168.1
(22) Anmeldetag: 29.04.1994
(51) Int. Cl.: C08K 5/00

(54) **PLASTISOLZUSAMMENSETZUNG**
PLASTISOL COMPOSITION
COMPOSITION DE PLASTISOL

(30) Priorität: 07.05.1993 DE 4315191
(43) Veröffentlichungstag der Anmeldung: 28.02.1996
(73) Patentinhaber: Henkel Teroson GmbH, 69123 Heidelberg (DE)
(72) Erfinder: BECK, Michael, D-40591 Düsseldorf (DE); RITTER, Wolfgang, D-42781 Haan (DE); RUCH, Klaus, D-69168 Wiesloch (DE)
(74) Vertreter: Mathes, Nikolaus
(86) Internationale Anmeldenummer: EP9401358
(87) Internationale Veröffentlichungsnummer: WO9426813

(56) Entgegenhaltungen:
- DE-A- 4 034 725

## Beschreibung

Die Erfindung betrifft eine neuartige Plastisolzusammensetzung auf Basis von Styrolcopolymeren, Weichmachern und anorganischen Füllstoffen sowie gegebenenfalls weiteren üblichen Zusätzen.

Unter Plastisolen werden allgemein Dispersionen von organischen Kunststoffen in Weichmachern verstanden, welche beim Erwärmen auf höhere Temperatur gelieren und beim Abkühlen aushärten. Die in der Praxis heute noch gebräuchlichen Plastisole enthalten ganz überwiegend feinpulvriges Polyvinylchlorid (PVC), welches in einem flüssigen Weichmacher dispergiert ist und eine Paste bildet. Derartige Polyvinylchloridplastisole finden für die verschiedensten Zwecke Anwendung. Sie werden u.a. als Dichtungsmassen, z.B. für Nahtabdichtungen bei Metallbehältern oder als Bördelnahtkleber in der Metallindustrie, als Korrosionsschutzüberzüge für Metalle (beispielsweise als Unterbodenschutz für Kraftfahrzeuge), zum Imprägnieren und Beschichten von Substraten aus textilen Materialien (z.B. als Teppichrückseitenbeschichtung), als Kabelisolierungen usw. eingesetzt).

Bei der Herstellung und Anwendung von PVC-Plastisolen treten jedoch eine Reihe von Problemen auf. Schon die Herstellung von PVC selbst ist nicht unproblematisch, weil in den Produktionsstätten die dort Beschäftigten einer gesundheitlichen Gefährdung durch das monomere Vinylchlorid ausgesetzt sind. Reste an monomerem Vinylchlorid im PVC könnten darüber hinaus auch bei der Weiterverarbeitung oder bei den Endverbrauchern gesundheitsgefährdend sein, obwohl die Gehalte im allgemeinen nur noch im ppb-Bereich liegen.

Besonders schwerwiegend ist bei der Anwendung von PVC-Plastisolen, daß das PVC sowohl wärme- als auch lichtempfindlich ist und zur Abspaltung von Chlorwasserstoff neigt. Dies stellt insbesondere dann ein ernstes Problem dar, wenn das Plastisol auf eine höhere Temperatur erhitzt werden muß, da der unter diesen Bedingungen frei gesetzte Chlorwasserstoff korrodierend wirkt und metallische Substrate angreift. Dies gilt insbesondere, wenn zur Verkürzung der Gelierzeit verhältnismäßig hohe Einbrenntemperaturen Anwendung finden, oder wenn, wie bei der Punktschweißung, lokal hohe Temperaturen auftreten.

Das größte Problem tritt bei der Entsorgung von PVC enthaltenden Abfällen auf: neben Chlorwasserstoff können u.U. Dioxine entstehen, welche bekanntlich hochgiftig sind. In Verbindung mit Stahlschrott können PVC-Reste zu einer Erhöhung des Chloridgehaltes der Stahlschmelze führen, was ebenfalls nachteilig ist.

Es ist deshalb das Ziel der Erfindung, eine polyvinylchloridfreie Plastisolzusammensetzung zu entwickeln, deren Anwendungseigenschaften denen von PVC-Plastisolen entsprechen.

Es sind bereits Beschichtungsmassen auf Polyurethan- oder Acrylatbasis bekannt geworden, die z.B. in der Automobilindustrie anstelle von PVC-Plastisolen eingesetzt werden. Zwei-Komponenten-Polyurethansysteme unterscheiden sich in der Anwendung grundlegend von üblichen Plastisolen, den Anwendern stehen die für deren Verarbeitung erforderlichen komplizierten Anlagen in der Regel nicht zur Verfügung.

Es sind auch Einkomponenten-Polyurethansysteme bekannt, die jedoch alle eine Reihe von anderen Nachteilen haben:
- Feuchtigkeitshärtende Systeme haben eine hohe Viskosität und sind daher ohne Lösungsmittel nicht zu applizieren.
- Bei Systemen mit blockierten Isocyanatgruppen kann bei dicken Schichten die Flüchtigkeit des Blockierungsmittels zu Blasenbildung führen, außerdem ist das anwendbare Temperaturintervall zwischen 150°C und 180°C für die Einbrennbedingungen häufig nicht einzuhalten.
- Wässrige PU-Dispersionen passen wegen des zu verdampfenden Wassers nicht in den üblichen Fertigungsablauf.
- Mikroverkapselte Polyurethansysteme haben mangelnde Scherstabilität, was bei der Applikation zu Gelierung in den Pumpen führt.

Acrylat-Plastisole, wie sie durch die DE-B-24 54 235 und DE-B-25 29 732 bekanntgeworden sind, erfüllen zwar die eingangs genannten technischen Anforderungen weitgehend, die erforderlichen Acrylatpolymeren sind jedoch ebenfalls weitaus teurer als Polyvinylchlorid, so daß die Anwendung derartiger Acrylatplastisole bislang auf spezielle Anwendungsgebiete, beispielsweise als Punktschweißpasten, beschränkt geblieben ist, bei denen PVC-Plastisole völlig versagen. Plastisole auf Basis von Styrol/Acrylnitril-Mischpolymerisaten gemäß der EP-A-261 499 stellen wegen unzureichender Abriebfestigkeit und/oder Lagerstabilität ebenfalls noch keine befriedigende Lösung dar.

Die DE-A-4139 382 schlägt Plastisole auf Basis von Kern/Schale-Polymeren vor, bei denen der Kern der Polymerteilchen aus einem Dien-Elastomer gebildet wird und die Schale aus einer kontinuierlichen Schicht aus einem Methylmethacrylharz, einem Acrylnitrilharz oder einem Vinylchlorid-Polymer besteht.

Die beiden erstgenannten Schalenmaterialien erfüllen zwar die Forderung nach einem chlorfreien Polymer, jedoch werden für lagerstabile Plastisole Polymerteilchen mit einem hohen Anteil an hartem Schalenmaterial benötigt. Da diese Polymeranteile zumindest partiell unverträglich mit dem Weichmacher sind, entstehen nach dem Gelierprozeß heterodisperse Systeme, die keine optimalen Gebrauchseigenschaften erzielen lassen. Vinylchlorid-Polymer als Schalenmaterial reduziert zwar den Chlor-Anteil gegenüber reinen PVC-Plastisolen, da diese jedoch nicht chlorfrei sind, stellen diese Polymere nur eine wenig befriedigende Teillösung des Problems dar.

Die EP-A-265 371 beschreibt Plastisole aus einer Dispersion aus carboxylgruppenhaltigen, feinteiligen Polymeren, welche mit mehrfunktionellen basischen Substanzen umgesetzt sind, in Weichmachern. Als Polymere finden Copolymerisate von beliebigen Monomeren mit polymerisierbaren Säuren, z.B. Copolymere von Vinylchlorid, Vinylidenchlorid, Acrylaten, Methacrylaten, Maleinaten, Styrol, Methylstyrol, Vinylestern, Vinylethern, Acrylnitril, Olefinen oder Dienen mit Säuren wie Acrylsäure, Methacrylsäure, Itaconsäure, Crotonsäure, Maleinsäure oder Fumarsäure Verwendung. Diese Copolymeren werden mit basischen Substanzen wie basischen Metallverbindungen mehrwertiger Metalle, mindestens bifunktionellen Aminverbindungen und anderen umgesetzt. In der praktischen Anwendung vermögen diese Plastisole nicht zu befriedigen; die mechanischen Eigenschaften (Elastizität bzw. Bruchdehnung) sind ungenügend. Es besteht ferner eine starke Neigung zur Verfärbung und bei Zusatz von polyfunktionellen Aminen tritt beim Gelieren eine großporige Blasenbildung auf.

Die DE-A-4034725 beschreibt, daß man Plastisolzusammensetzungen mit ausgezeichneten Anwendungseigenschaften, insbesondere guter Lagerstabilität, guter Haftung auf Metallen und hoher Abriebfestigkeit und guten mechanischen Eigenschaften, erhalten kann, wenn man als organische Polymerkomponente durch Emulsionspolymerisation herstellbare Styrolcopolymer-Pulver einsetzt, welche
a) Styrol und/oder α-Methylstyrol und/oder p-Methylstyrol und
b) 3 bis 20 Gew.% (bezogen auf das Copolymere) Methacrylsäure und/oder Acrylsäure und/oder Itaconsäure enthalten.

Bei der Emulsionspolymerisation dieser Styrolcopolymeren können Polymerteilchen mit einer sehr einheitlichen durchschnittlichen Primärteilchengröße von etwa 0,3 bis 1,5 µm erhalten werden, bei denen die polaren Carboxylgruppen im wesentlichen außen angeordnet sind und als lipophobe Reste offenbar für die Stabilität der Dispersionen dieser Teilchen im Weichmacher bei Raumtemperatur verantwortlich sind. Diese Copolmeren haben ein Molekulargewicht in der Größenordnung von 200000 bis 1000000. Die daraus hergestellten Plastisole überwinden bereits viele der oben beschriebenen Nachteile anderer chlorfreier Plastisolsysteme insbesondere durch die Möglichkeit der Verwendung reaktiver Zusätze. Es hat sich jetzt gezeigt, daß die an sich vorteilhaften Eigenschaften dieser Plastisole signifikant verbessert werden können.

Durch Änderung des Initiatorsystems in Art und/oder Menge können Copolymere mit gleicher Zusammensetzung erzeugt werden, bei denen zumindest ein erheblicher Anteil ein Molekulargewicht von weit über 10⁶ hat, in der Regel haben mindestens 50 Gew.% des Copolymeren ein Molekulargewicht von über 10⁶. Vorzugsweise wird hierzu ein an sich bekanntes Redoxsystem von Wasserstoffperoxid in Kombination mit Ascorbinsäure bzw. Isoascorbinsäure verwendet. Es können jedoch auch ohne weiteres andere, vorzugsweise wasserlösliche Peroxide oder anorganische Perverbindungen verwendet werden, Beispiele hierfür sind t-Butylhydroperoxid, Natriumperoxodisulfat, Kaliumperoxodisulfat oder Ammoniumperoxodisulfat. Auch andere in der radikalischen Polymerisation gebräuchliche Reduktionsmittel können anstelle der Ascorbinsäure bzw. Isoascorbinsäure verwendet werden, Beispiele hierfür sind Formaldehydnatriumsulfoxylat (Rongalit (R)), Natriumbisulfat, Zucker, Amine, Hydroxylammoniumverbindungen, Weinsäure oder Eisensalze. Derartige Redoxsysteme sind auch in der Emulsionspolymerisation an sich bekannt, vorzugsweise wird Wasserstoffperoxid jedoch zur Herstellung von niedermolekularen Oligomeren bzw. Polymeren mit Molekulargewichten unter 50000 eingesetzt, insbesondere, um sogenannte telomere oder telechele Polymere niederen Molekulargewichtes mit Hydroxylgruppen oder wasserlösliche Polymere zu erzeugen. Derartige Polymere bzw. deren Herstellung sind z.B. in der EP-A-438 215, der EP-A-337 694, der DE-C-3346 350 oder der JP-A-89/4817 beschrieben.

Die Wahl des für die Emulsionspolymerisation benötigten Emulgators ist nicht besonders kritisch, im einfachsten Fall kann Natriumlaurylsulfat verwendet werden, jedoch eignen sich eine Vielzahl anionischer und/oder nichtionischer Emulgatoren wie z.B. Alkylsulfate bzw.-sulfonate, Arylsulfate bzw.-sulfonate sowie die entsprechenden Alkylarylderivate, Sulfosuccinate, (Alkyl)Naphthalinsulfonate bzw. deren Kondensate mit Formaldehyd sowie Alkyl-, Aryl- bzw. Alkyl/Arylphosphate, Fettalkoholethoxylate, Alkylphenolethoxylate.
In Ausnahmefällen sind auch kationische Emulgatoren geeignet. Die Wahl der Emulgatoren richtet sich nach der gewünschten Primärteilchengröße des Polymerisats, der notwendigen Stabilität der wässrigen Polymerdispersion für die Weiterverarbeitung sowie in manchen Fällen auch nach den gewünschten Eigenschaften des daraus hergestellten plastisols.

Neu und überraschend ist es, daß mit einem einfachen Redoxsystem aus Wasserstoffperoxid und Isoascorbinsäure ohne besondere Vorkehrungen Polymere mit besonders hohem Molekulargewicht hergestellt werden können. Dabei beträgt das durch Gelpermeationschromatographie bestimmte Maximum der Molekulargewichtsverteilung des Copolymeren mehr als 1 Million. Weiterhin ist neu und überraschend, daß derartige Polymere sich besonders gut für die Plastisoltechnologie eignen, da bekanntermaßen bei den üblichen Plastisolen auf Basis von Polyvinylchlorid und dessen Copolymeren vorzugsweise Polymere im Molekulargewichtsbereich zwischen 50000 und 100000 eingesetzt werden. Diese zumindest teilweise Erhöhung des Molekulargewichtes der Styrolcopolymeren ermöglicht die Formulierung von Plastisolen, die in erwarteter Weise höhere Zugfestigkeiten haben. Es wurde jetzt überraschend gefunden, daß diese Plastisole mindestens gleichwertige, in der Regel jedoch höhere Bruchdehnungen aufweisen und gleichzeitig vergleichbar gute Abriebeigenschaften gegenüber denen in der DE-A-4034725 beschriebenen haben. Darüber hinaus lassen sich diese Abriebwerte durch einfache, an sich bekannte Zusätze zu den Plastisolformulierungen noch erheblich steigern, so daß die Abriebwerte diejenigen der anerkanntermaßen guten PVC-Plastisole übertreffen können.

Die erfindungsgemäß eingesetzten Copolymeren enthalten neben Styrol und/oder α-Methylstyrol und/oder p-Methylstyrol 3 bis 20 Gew.%, vorzugsweise etwa 5 bis 10 Gew.% Meth)acrylsäure und/oder Itaconsäure. Mit steigendem Gehalt an (Meth)acrylsäure und/oder Itaconsäure steigt die Lagerstabilität der Plastisole an. Aufgrund der freien Carboxylgruppen zeigen die Plastisole darüber hinaus eine hervorragende Haftung auf Substraten aus Metall (z.B. Stahl oder Zink) oder auf kataphoretischen Elektrotauchlacken. Der Gehalt an (Meth)acrylsäure und/oder Itaconsäure im Copolymeren soll jedoch 20 Gew.% und vorzugsweise etwa 10 Gew.% nicht übersteigen, weil dann die Abriebfestigkeit des Plastigels abnimmt. Bis zu 30 Gew.% der Comonomer-Komponente b) ((Meth)acrylsäure und/oder Itaconsäure) kann durch Methyl(meth) acrylat, (Meth)acrylamid und/oder Glycidyl(meth)acrylat ersetzt sein.

Bevorzugte Ausführungsformen der Erfindung sind in den abhängigen Ansprüchen beschrieben.

Außer den vorgenannten Comonomerkomponenten können noch weitere funktionelle Monomere in kleinen Mengen als vernetzend wirkende Comonomere copolymerisiert werden. Der Anteil des vernetzend Wirkenden Comonomeren liegt in der Regel zwischen 0,5 und 10 gew%, vorzugsweise zwischen 1 und 5 gew% bezogen auf das Copolymere. Funktionelle Monomere im Sinne der Erfindung sind solche Monomere, die zusätzlich zur olefinisch ungesättigten Doppelbindung eine funktionelle Gruppe tragen, die während der radikalischen Polymerisation zur Herstellung des Copolymeren nicht reagiert, sondern während der Gelierung des Plastisols zu Vernetzungsreaktionen zur Verfügung steht. Beispiele für derartige funktionelle Monomere sind außer den oben erwähnten Glycidyl(meth)acrylat, Hydroxyethyl(meth)acrylat, Hydroxypropyl(meth)acrylat, Hydroxybutyl (meth)acrylat, Isocyanatoethyl(meth)acrylat, 1-(1-isocyanato-1-methylethyl)-4-(1-methyl ethenyl)-Benzol (m-TMI) sowie deren Derivate mit blockierter Isocyanatgruppe oder Methylol(meth)acrylamid sowie die entsprechenden Alkylether. Als funktionelle Comonomere können auch die Umsetzungsprodukte aus einem Equivalent Hydroxyethyl-, Hydroxypropyl- oder Hydroxybutyl- (meth)acrylat und einem Äquivalent eines Di- oder Polyisocyanates eingesetzt werden, wobei die verbleibende Isocyanatgruppe vorzugsweise blockiert ist. Als Blockierung Ist irgendeine der in der Polyurethanchemie bekannten Methoden verwendbar, die Blokkierungsart richtet sich nach den Reaktionskomponenten im Plastisol sowie nach der vorgesehenen Gelierungstemperatur des Plastisols. Beispielhaft genannt seien Blockierung durch Oxime, Caprolactam, Malonsäureester oder Methanol.

Zur Erhöhung der Flexibilität und damit der Abriebfestigkeit des aus der erfindungsgemäßen Plastisolzusammensetzung hergestellten Plastigels kann die Styrolkomponente a) des Copolymeren bis zu 45, insbesondere bis zu 20 Gew.% (bezogen auf das Styrol) an Butadien, Isopren, Piperylen und/oder eines anderen kautschukbildenden Comonomeren enthalten.

Die mittlere Primärteilchengröße des Copolymerpulvers liegt zwischen etwa 0,3 und 1,5 µm, was durch entsprechende Steuerung der Emulsionspolymerisation erreicht werden kann. Die aus den Primärteilchen durch Trocknung zum Pulver gebildeten Agglomerate weisen eine durchschnittliche Sekundärteilchengröße von weniger als 100 µm, vorzugsweise von etwa 20 bis 60 µm auf.

Erfindungsgemäß ist es darüber hinaus möglich, Eigenschaften des Plastigels, insbesondere die Abriebfestigkeit, dadurch weiter zu verbessern, daß man dem Plastisol eine bei der Geliertemperatur mit den Carboxylgruppen des Copolymeren unter Vernetzung reagierende Verbindung in einer Menge bis zu 40 Gew.% zusetzt. Für eine Reaktion mit den vorhandenen Carboxylgruppen kommen insbesondere langkettige Epoxyverbindungen, epoxidierte Polybutadiene oder auch epoxidierte natürliche Öle wie epoxidiertes Sojabohnenöl in Betracht. Geeignet sind ferner auch di- oder polyhydroxyfunktionelle Polyethylen- und/oder Polypropylenglykole oder deren Copolymere. Weiterhin können flüssige hydroxyfunktionelle Polybutadiene oder mercaptanterminierte Flüssigpolymere anstelle von oder in Kombination mit den oben genannten Polypropylenglykolen verwendet verwendet werden. Die Bildung von Esterbindungen zwischen diesen Verbindungen und den Carboxylgruppen des Styrolcopolymeren findet im allgemeinen bereits beim Erwärmen des Plastisols auf die Geliertemperatur statt. Gegebenenfalls können jedoch geeignete Katalysatoren in einer Menge von etwa 0.01 bis 2.0 Gew.%, z.B. Imidazol oder substituierte Imidazole wie N-Alkylimidazole, z.B. N-Methylimidazol, tert. Amine, Tetramethylendiamin oder Harnstoffderivate zugesetzt werden. Für die Esterbildung mit Glykolen sind auch Alkylbenzolsulfonsäuren und Titanate als Katalysatoren geeignet.

Weiterhin können den erfindungsgemäßen Plastisolen amino- und/oder amidofunktionelle Verbindungen und/oder blokkierte Polyurethane einzeln oder in Kombination zugesetzt werden, wie sie aus der PVC-Plastisoltechnologie als Haftvermittler bekannt sind. Obwohl ihr Wirkungsmechanismus noch nicht voll verstanden wird, bewirken sie in den erfindungsgemäßen Plastisolen in erster Linie keine Verbesserung der Haftung - diese ist in der Regel bereits völlig ausreichend - sondern eine erhebliche Verbesserung der Abriebfestigkeit. Beispiele für derartige Verbindungen sind die wohlbekannten Polyaminoamide auf Basis dimerisierter Fettsäuren und niedermolekularen Di- oder Polyaminen, wie sie z.B. unter den Handelsnamen Versamid 115, 125 oder 140 bekannt sind und/oder aminofunktionelle Kondensationsprodukte aus Epoxiden auf Basis des Bisglycidylethers des Bisphenols A mit Diaminen oder Polyaminen wie z.B. Ethylendiamin, Propylendiamin usw.

Eine weitere Möglichkeit zur Verbesserung der mechanischen Eigenschaften der Plastigele besteht darin, daß man in dem Weichmacher Polyurethanbildner in Form von Isocyanatprepolymeren und niedermolekularen aliphatischen oder cycloaliphatischen Diaminen löst. Die Isocyanatprepolymeren enthalten dabei vorzugsweise blockierte Isocyanatgruppen, z.B. durch Caprolactam blockierte Isocyanatgruppen, oder sie liegen in Form von festen, mikroverkapselten Isocyanatprepolymeren als Dispersion in der flüssigen Phase vor. Diese Isocyanatprepolymeren können in einer Menge bis zu 30 Gew.% der Gesamtformulierung vorliegen, die (cyclo)aliphatischen Diamine können bei niedrigmolekularen Aminen (bis zu einem Molekulargewicht von etwa 500) bis zu 5 Gew.% bei höhermolekularen Diaminen bis zu 30 Gew.% der Gesamtformulierung ausmachen. Beim Erhitzen auf die Geliertemperatur tritt eine Polyurethanbildung ein, wobei mit dem dispergiert vorliegenden Styrolcopolymeren möglicherweise eine IPN-Struktur (Interpenetrating Polymer Network) gebildet wird.

Wenn in das Copolymere noch eines der weiter oben beschriebenen vernetzend wirkenden Comonomeren einpolymerisiert wurde, können die erfindungsgemäßen Plastisole zur Verbesserung der mechanischen Eigenschaften noch weitere reaktive Zusätze enthalten. Diese richten sich nach dem eingesetzten vernetzend wirkenden Comonomer. Bei hydroxyfunktionellen Comonomeren können Di- oder Polyisocyanate zugesetzt werden, wobei letztere vorzugsweise blockiert oder mikroverkapselt sind, bei epoxyfunktionellen Comonomeren werden vorzugsweise Di- oder Polyamine oder Polyaminoamide zugesetzt, bei (blockierten) isocyanatfunktionellen Comonomeren können amino- und/oder hydroxyfunktionelle Zusätze verwendet werden. Gegebenenfalls können diese Vernetzungsreaktionen durch an sich bekannte Katalysatoren beschleunigt werden.

Durch die reaktiven Zusätze werden folgende Eigenschaftsverbesserungen erreicht:
· Durch die Vernetzung wird die Temperaturstabilität und die Hochtemperaturformstabilität entscheidend verbessert,
· die weichen Segmente der Additive bewirken eine Flexibilisierung und höhere Dehnfähigkeit sowie eine deutliche Verbesserung der Abriebfestigkeit der erfindungsgemäßen Plastisole nach dem Gelieren,
· durch eine Variation der reaktiven Zusätze lassen sich die Eigenschaften in weiten Grenzen verändern, ohne daß dazu viele unterschiedliche Styrolcopolymere separat hergestellt werden müssen,
· die Kälteflexibilität wird entscheidend verbessert,

Auf 100 Gewichtsteile des Styrolcopolymeren enthält die Plastisolzusammensetzung etwa 30 bis 1000 Gewichtsteile Weichmacher. Als Weichmacher sind an sich die herkömmlichen organischen Weichmacher geeignet (vergl. hierzu Paul E. Bruins, Plasticizer Technology [Weinhold Publishing Corporation, New York], Bd. 1, S. 228 bis 232. Bevorzugt werden Alkylphthalate wie Dibutylphthalat, Dioctylphthalat, Butylbenzylphthalat, Dibenzylphthalat und ganz besonders Diisononylphthalat (DINP). Geeignet sind jedoch auch die bekannten Weichmacher aus der Gruppe der organischen Phosphate, Adipate und Sebacate oder auch Benzylbenzoat oder Diphenylether.

Außer den bisher genannten Zusätzen können die erfindungsgemäßen Plastisole noch übliche in der Plastisoltechnologie gebräuchliche Zusätze enthalten, dazu gehören unter anderem Füllstoffe wie z.B. Calciumcarbonat in Form der diversen Kreiden, Schwerspat, Glimmer, Vermiculit, Pigmente wie z.B. Titandioxid, Ruß, Eisenoxide, Treibmittel zur Herstellung von geschäumten Plastisolen, Alterungsschutzmittel, Rheologie-Hilfsmittel wie z.B. pyrogene Kieselsäuren, Bentone, Rizinusölderivate.

Die Herstellung der erfindungsgemäß eingesetzten Styrolcopolymeren erfolgt durch Polymerisation in Emulsion vorzugsweise nach dem sogenannten Keimlatex-Verfahren. Dabei wird zunächst in wässriger Phase unter Verwendung geeigneter Emulgatoren ein Keimlatex erzeugt, welcher vorgelegt wird, worauf die Monomeren und ggf. weiterer Emulgator zudosiert werden. Auf diese Weise ist es möglich, die gewünschte durchschnittliche Teilchengröße relativ genau einzustellen. Außerdem lassen sich sehr enge Teilchengrößenverteilungen realisieren, dies ist sehr wünschenswert für die Herstellung von Plastisolen mit niedriger und reproduzierbarer Pastenviskosität. Ferner erreicht man, daß sich die hydrophilen Reste, insbesondere die Carboxylgruppen, nach außen zur wässrigen Phase hin orientieren, so daß die gewünschte Kern/Schale-Struktur erhalten wird. Es ist ggf. auch möglich, zunächst überwiegend die Styrolkomponente zu polymerisieren und das Comonomere erst im späteren Stadium der Polymerisation zuzugeben; diese Arbeitsweise empfiehlt sich insbesondere dann, wenn die Comonomeren weniger polare Reste aufweisen, z.B. Estergruppen.

Anschließend werden die so erhaltenen Dispersionen in ein trockenes Pulver überführt, wofür die Sprühtrocknung besonders geeignet ist, wenn dabei die Temperaturbedingungen so gewählt werden, daß die Primärteilchen nicht zusammensintern, sondern lediglich lockere Agglomerate bilden.

Die erfindungsgemäßen Plastisole eignen sich im Kraftfahrzeugbau besonders als Unterbodenschutzmittel sowie ferner als Klebstoffe für die Haubenunterfütterung, als Massen zum Schwellerschutz, als Punktschweißpasten, als Metallklebstoff sowie andere Klebstoffanwendungen. In der Verpackungsindustrie können sie als Dichtungsmassen für Behälterverschlüsse wie Kronenkorken sowie als Nahtabdichtungsmittel und Bördelnahtklebstoffe für Blechdosen mit Vorteil Anwendung finden.

Außerdem lassen sich diese Plastisole und/oder Plastisole auf Basis der DE-A-4034725 und/oder der DE-A-4139382 auch für eine Vielzahl anderer technischer Anwendungen einsetzen, dazu zählen u.a. Beschichtungsmassen für Tapeten, Bodenbeläge, Textilbeschichtungsmassen, Ummantelung von Scheiben, z.B. für den Automobil- und sonstigen Fahrzeugbau analog zu dem in der EP-B-333538 beschriebenen Verfahren, als Klebstoff zur Herstellung von Mehrscheiben-Sicherheitsglas. Weiterhin lassen sich die erfindungsgemässen Plastisole zur Herstellung von Bodenbelägen verwenden.

Zur näheren Erläuterung der Erfindung sollen die nachfolgenden Beispiele dienen:

### Beispiel 1 (Herstellung des Copolymeren)

Die Reaktion erfolgt im Behälter R1. Der Reaktor ist mit einem Rührer bestehend aus drei MIG-Stufen ausgerüstet. Die Rührerdrehzahl ist stufenlos einstellbar. Als Vorlagen werden die Behälter R2, R3 und R4 verwendet. Die Vorlagen werden gerührt.

Die Beheizung bzw. Kühlung der Behälter erfolgt über eine Mischwasser-Batterie. Es sind Temperaturen zwischen 15°C und 70°C einstellbar. Alle Vorlagen sind verwogen und über eine Edelstahlleitung mit dem R1 verbunden. Die Dosierung der Inhalte erfolgt automatisch durch Vorwahl der entsprechenden Dosierrate. Der Reaktor R1 besitzt verschiedene Heiz- bzw. Kühlkreisläufe. Über zwei getrennte, im R1 eingebaute Temperaturfühler (Produkttemperatur) kann die Anlage in einem Temperaturbereich von 15°C bis 120°C betrieben werden. Zur Erzeugung einer inerten Atmosphäre im R1 kann Stickstoff sowohl am Reaktorkopf als auch oberhalb des Steigrohres D1 übergeleitet werden. Der Vakuumkreislauf der Anlage besteht aus einer Wasserringpumpe. Für Destillationen ist der R1 mit einem beneiz- oder kühlbarem Steigrohr und einem Rohrbündelwärmetauscher ausgerüstet. Über die Destillationsvorlagen B1 und B2 besteht die Möglichkeit, das Destillat wieder in den R1 einzuschleusen.

Die Dosierung der Monomeren aus dem R2 in den R1 wird gravimetrisch gesteuert. Emulgator (R3) und Initiator (R4) werden in maximaler Entfernung vom Monomerstrom in den Reaktor (R1) dosiert (ebenfalls gravimetrisch). Die überschüssige Reaktionswärme wird durch Temperierung des R1 mit Mischwasser abgeführt. Über zwei Temperaturfühler im Reaktor wird die Produkttemperatur geregelt.

Das vorliegende Verfahren ist eine einfache radikalische Copolymerisation von Styrol mit Methacrylsäure in einer wässrigen Emulsion bei einem Wassergehalt von ca. 50%. Die Polymerisation wird über das Redoxsystem Wasserstoffperoxid/Isoascorbinsäure initiiert. Die Zugabe der Monomeren, des Initiatorsystems, des Emulgators sowie des Wassers erfolgt kontinuierlich mit einer konstanten Dosierrate, um ein gleichmäßiges Wachstum der Polymerteilchen und die konstante Freisetzung der Reaktionswärme zu garantieren. Es werden die folgenden Komponenten eingesetzt:

| | | |
|---|---|---|
| Vorlage | Wasser | 48,670 kg |
| | Texapon K 12 (R) | 0,018 kg |
| | Saat | 4,760 kg |
| | Isoascorbinsäure | 0,120 kg |
| | | |
| Monomer | Styrol | 80,190 kg |
| | Methacrylsäure | 4,500 kg |
| | | |
| Emulgator | Wasser | 20,500 kg |
| | Texapon K 12 (R) | 0,630 kg |
| | Isoascorbinsäure | 0,336 kg |
| | | |
| Initiator 1 | Wasserstoffperoxid (35%ig) | 0,115 kg |
| Initiator 2 | Wasser | 21,150 kg |
| | Texapon K 12 (R) | 0,013 kg |
| | Wasserstoffperoxid (35%ig) | 3,080 kg |
| | | |
| Initiator 3 | Wasserstoffperoxid (35%ig) | 0,050 kg |
| | | |
| Summe | | 184,102 kg |

Sofort nach Zugabe des Initiator 1 beginnt die gleichmäßige Dosierung des Initiator 2, des Emulgators sowie der Monomeren. Die Innentemperatur wird auf 83°C eingestellt. Nach vier Stunden ist die Dosierung beendet.

Nach Abschluß der Zulaufphase wird der Ansatz noch weitere drei Stunden bei 80°C gehalten (Nachpolymerisationsphase zur Reduzierung des Restmonomers). Eine Stunde nach Ende des Monomerzulaufs wird der Initiator 3 in den Reaktor gegeben.

Nach Beendigung der Reaktion wird die Dispersion abgekühlt (≤ 45°C) und über einen Filterbeutel abgelassen.

Zur Gewinnung eines für die Plastisolherstellung geeigneten Polymerpulvers wird die Dispersion sprühgetrocknet, wobei die jeweils gewählten Parameter von der eingesetzten Anlage abhängig sind. Folgende Bedingungen wurden angewendet:
Lufteinlaßtemperatur: 190 - 200°C
Luftauslaßtemperatur: 95 - 100°C
Agglomerat-Teilchengröße des getrockneten Pulvers: 35 ± 5 µm.
Die Molekulargewichtsbestimmung des so gewonnenen Polymerpulvers wurde mit Hilfe der Gelpermeationschromatographie (GPC) durchgeführt, Säulenkombination: 10⁶, 10⁵, 10⁴, 10³, 500 Å Ultrastyragel,
Lösungsmittel: Tetrahydrofuran, 1,0 ml/min
Eichung: Polystyrol-Standards
Gewichtsmittel des Molgewichtes (M_{W}): 1,0·10⁶
Peak der Molgewichtsverteilung: 2,4·10⁶.

Unter Peak der Molgewichtsverteilung wird das Maximum der Molgewichtsverteilungskurve der GPC verstanden.

### Beispiel 2 (Vergleichsversuch zur Herstellung eines Copolmeren)

Es wurde wie im Beispiel 1 verfahren, jedoch wurden insgesamt 0.556 kg Isoascorbinsäure eingesetzt.

Die Aufarbeitung der Polymerdispersion erfolgte in gleicher Weise wie im Beispiel 1.
Molekulargewichtsbestimmung: M_{W} = 310 000
Peak der Molgewichtsverteilung: 150 000

### Beispiel 3 (erfindungsgemäße Plastisolzusammensetzung)

| | |
|---|---|
| Polymerpulver gemäß Beispiel 1 | 35,0 Teile |
| DINP | 36,0 Teile |
| Kreide | 11,2 Teile |
| Bariumsulfat | 5,0 Teile |
| Calciumoxid | 1,0 Teile |
| Aerosil 200 (R) | 0,3 Teile |
| Verdünner | 1,5 Teile |
| Versamid 140 (R) | 1,0 Teile |
| PU-Prepolymer | 4,0 Teile |
| Aminaddukt | 1,0 Teile |
| Dicyclohexylphthalat | 5,0 Teile |
| | |
| Einbrenndauer | 25 min |
| Einbrenntemperatur | 160°C |
| Schichtdicke | 1000 µm |
| Abriebzeit | 11 min 53 sek |

### Beispiel 4 (erfindungsgemäße Plastisolzusammensetzung)

| | |
|---|---|
| Polymerpulver gemäß Beispiel 1 | 30,0 Teile |
| DINP | 36,0 Teile |
| Kreide | 16,2 Teile |
| Bariumsulfat | 5,0 Teile |
| Calciumoxid | 1,0 Teile |
| Aerosil 200 | 0,3 Teile |
| Verdünner | 1,5 Teile |
| Versamid 140 | 1,0 Teile |
| PU-Prepolymer | 4,0 Teile |
| Aminaddukt | 1,0 Teile |
| Dicyclohexylphthalat | 5,0 Teile |
| | |
| Einbrenndauer | 25 min |
| Einbrenntemperatur | 160°C |
| Schichtdicke | 1000 µm |
| Abriebzeit | 14 min 30 sek |
| | |

### Vergleichsbeispiel 1 (aus P 4034725.7):

| | |
|---|---|
| Polymerpulver | 100,0 Teile |
| DINP | 100,0 Teile |
| | |
| Einbrenndauer | 30 min |
| Einbrenntemperatur | 150°C |
| Schichtdicke | 1000 µm |
| Abriebzeit | 44 sek |

### Vergleichsbeispiel 2 (aus P 4034725.7):

| | |
|---|---|
| Polymerpulver | 200,0 Teile |
| DINP | 200,0 Teile |
| Polyurethan | 100,0 Teile |
| Diamin | 10,0 Teile |
| Kreide | 200,0 Teile |
| Calciumoxid | 40,0 Teile |
| | |
| Einbrenndauer | 25 min |
| Einbrenntemperatur | 160°C |
| Schichtdicke | 1000 µm |
| Abriebzeit | 9 min 50 sek |
| | |

### Vergleichsbeispiel 3

| | |
|---|---|
| Polymerpulver gemäß Beispiel 2 | 35,0 Teile |
| DINP | 36,0 Teile |
| Kreide | 11,2 Teile |
| Bariumsulfat | 5,0 Teile |
| Calciumoxid | 1,0 Teile |
| Aerosil 200 (R) | 0,3 Teile |
| Verdünner | 1,5 Teile |
| Versamid 140 (R) | 1,0 Teile |
| PU-Prepolymer | 4,0 Teile |
| Aminaddukt | 1,0 Teile |
| Dicyclohexylphthalat | 5,0 Teile |
| | |
| Einbrenndauer | 25 min |
| Einbrenntemperatur | 160°C |
| Schichtdicke | 1000 µm |
| Abriebzeit | 1 min 53 sek |

Anmerkungen zu den Beispielen 1 bis 4 und Vergleichsbeispielen 1 bis 3.

| | |
|---|---|
| Texapon K 12 (R) | Natriumlaurylsulfat, Fa. Henkel |
| Versamid 140 (R) | Polyaminoamid auf Basis dimerer Linolsäure/Ethylendiamin, Fa. Schering |
| Aerosil 200 (R) | hochdisperse Kieselsäure, Fa. Degussa. |
| | |
| PU-Prepolymer | Caprolactam blockiertes Prepolymer auf Basis Diphenylmethandiisocyanat und OH-funktionellem Adipinsäureester, Molgewicht ca. 4.000. |
| | |
| Amin-Addukt | aminofunktionelles Kondensationsprodukt aus einem Epoxid auf Basis Diglycidylether des Bisphenols A und Ethylendiamin, Molgewicht ca. 800. |

Die Abriebwert wurden nach der "Sablux"-Methode durch Schrägbeschuß (30°) mit Stahlschrot bei ca. 4 bar Druck bestimmt.

Aus dem Vergleich der oben angeführten erfindungsgemäßen Beispielen mit den Vergleichsbeispielen geht klar hervor, daß die Plastisole auf Basis des erfindungsgemäßen Copolymers mit hohem Molekulargewicht sowohl denen mit niederem Molgewicht (Vergleichsbeispiel 3) als auch denen des Standes der Technik (Vergleichsbeispiele 1 und 2) deutlich überlegen sind.

## Patentansprüche

1. Polyvinylchlorid-freie Plastisolzusammensetzung auf Basis von Weichmachern, Füllstoffen und StyrolCopolymeren enthaltend
a) Styrol und/oder α-Methylstyrol und/oder p-Methylstyrol und
b) 3 bis 20 Gew.% (bezogen auf das Copolymere) Methacrylsäure und/oder Acrylsäure und/oder Itaconsäure,
c) gegebenenfalls weitere vernetzend wirkende Comonomere,
**dadurch gekennzeichnet**, daß das durch Gelpermeationschromatographie bestimmte Maximum der Molekulargewichtsverteilung des Copolymeren größer als 1 Million ist.

2. Plastisolzusammensetzung gemäß Anspruch 1, **dadurch gekennzeichnet**, daß die Styrolkomponente a) des Copolymeren bis zu 45 Gew.% (bezogen auf das Styrol) Butadien, Isopren, Piperylen und/oder eines anderen Kautschuk bildenden Comonomeren enthält.

3. Plastisolzusammensetzung gemäß Anspruch 1 oder 2, **dadurch gekennzeichnet**, daß ein Teil der Comonomer-Komponente b) durch Methyl(meth)acrylat oder (Meth)acrylamid ersetzt ist.

4. Plastisolzusammensetzung nach einem der Ansprüche 1 bis 3, **dadurch gekennzeichnet**, daß der Anteil an Comonomer-Komponente b) im Styrolcopolymeren 5 bis 10 Gew.% (bezogen auf das Copolymere) beträgt.

5. Plastisolzusammensetzung nach einem der Ansprüche 1 bis 4, **dadurch gekennzeichnet**, daß das Copolymere als Pulver mit einer durchschnittlichen Primärteilchengröße von 0,3 bis 1,5 µm und mit einer durchschnittlichen Sekundärteilchengröße von weniger als 100 µm vorliegt.

6. Plastisolzusammensetzung nach einem der Ansprüche 1 bis 5, **dadurch gekennzeichnet**, daß das Copolymere eine Kern/Schale-Struktur aufweist, bei der die polaren Gruppen im wesentlichen außen liegen.

7. Plastisolzusammensetzung mindestens nach einem der Ansprüche 1 bis 6, **dadurch gekennzeichnet**, daß das Copolymere ein vernetzend wirkendes Comonomeres enthält.

8. Plastisolzusammensetzung gemäß Anspruch 7, **dadurch gekennzeichnet**, daß der Anteil des vernetzend wirkenden Comonomeren 0,5 bis 10 Gew.%, vorzugsweise 1 bis 5 Gew.% bezogen auf das Copolymere beträgt.

9. Plastisolzusammensetzuna nach mindestens einem der Ansprüche 1 bis 8, **dadurch gekennzeichnet**, daß zur Herstellung des Copolymeren ein Initiatorsystem aus Wasserstoffperoxid und Isoascorbinsäure verwendet wird.

10. Plastisolzusammensetzung nach einem der Ansprüche 1 bis 9, **dadurch gekennzeichnet**, daß sie zusätzlich eine bei der Geliertemperatur mit dem Copolymeren unter Vernetzung reagierende Verbindung enthält.

11. Plastisolzusammensetzung nach Anspruch 10, **dadurch gekennzeichnet,** daß sie als mit Carboxylgruppen vernetzend wirkende Verbindung langkettige Epoxyverbindungen, epoxidierte Polybutadiene oder di- oder polyhydroxyfunktionelle Polyethylen- und/oder Polypropylenglykole oder deren Copolymere oder hydroxyfunktionelle Polybutadiene enthält.

12. Plastisolzusammensetzung nach Anspruch 10, **dadurch gekennzeichnet**, daß sie zusätzlich mindestens eine Verbindung enthält, die bei der Geliertemperatur des Plastisols mit dem vernetzend wirkenden Comonomeren unter Vernetzung reagiert.

13. Plastisolzusammensetzung nach den Ansprüchen 7,8,11 oder 12, **dadurch gekennzeichnet**, daß sie zusätzlich einen Katalysator für die Vernetzungsreaktion enthält.

14. Plastisolzusammensetzung nach Anspruch 13, **dadurch gekennzeichnet**, daß sie als Katalysator gegebenenfalls substituierte Imidazole, tertiäre Amine, Tetramethylendiamin, Harnstoffderivate, Alkylbenzolsulfonsäuren oder Titanate oder organische Zinnverbindungen enthält.

15. Plastisolzusammensetzung nach einem der Ansprüche 7 oder 8, **dadurch gekennzeichnet**, daß das Copolymer als vernetzend wirkendes Comonomer ein funktionelles Monomer enthält, das außer einer olefinisch ungesättigten Doppelbindung als zusätzliche funktionelle Gruppe eine Epoxygruppe, eine Isocyanatgruppe, eine blokkierte Isocyanatgruppe oder eine Hydroxylgruppe enthält, und daß das Plastisol als mit den zusätzlichen funktionellen Gruppen vernetzend wirkende Verbindungen Di- oder Polyamine, Di- oder Polyaminoamide, Di- oder Polycarbonsäuren, Di- oder Polymercaptoverbindungen oder Di- oder Polyisocyanate, gegebenenfalls in blockierter oder mikroverkapselter Form enthält.

16. Plastisolzusammensetzung nach einem der Ansprüche 1 bis 15, **dadurch gekennzeichnet**, daß sie zusätzlich gelöst in dem Weichmacher eine gegenüber dem Copolymeren untergeordnete Menge an Polyurethanbildnern in Form von Isocyanatprepolymeren und (cyclo)aliphatischen Diaminen enthält, welche bei der Geliertemperatur unter Polyurethanbildung reagieren.

17. Plastisolzusammensetzung nach Anspruch 16, **dadurch gekennzeichnet**, daß sie Isocyanate mit blockierten Isocyanatgruppen enthält.

18. Plastisolzusammensetzung nach einem der Ansprüche 15 bis 17, **dadurch gekennzeichnet**, daß sie die Isocyanatprepolymeren in einer Menge bis zu 30 Gew.% der Gesamtformulierung und die (cyclo)aliphatischen Diamine bei niedrigmolekularen Aminen (bis zu einem Molekulargewicht von etwa 500) in einer Menge bis zu 5 Gew.% bei höhermolekularen Diaminen in einer Menge bis zu 30 Gew.% der Gesamtformulierung enthält.

19. Plastisolzusammensetzung nach einem der Ansprüche 1 bis 18, **dadurch gekennzeichnet**, daß sie auf 100 Teile des Copolymeren bis zu 700 Teile inerter Füllstoffe und/oder weitere in Plastisolen übliche Zusätze enthält.

20. Verwendung einer Plastisolzusammensetzung gemäß einem der Ansprüche 1 bis 19 im Kraftfahrzeugbau als Unterbodenschutzmittel, als Klebstoff für die Haubenunterfütterung, als Masse zum Schwellerschutz, als Metallklebstoff oder als Punktschweißpaste.

21. Verwendung einer Plastisolzusammensetzung gemäß einem der Ansprüche 1 bis 19 in der Verpackungsmittelindustrie als Dichtungsmasse für Behälterverschlüsse oder als Nahtabdichtungsmittel oder als Bördelnahtklebstoff für Blechdosen.

22. Verwendung einer Plastisolzusammensetzung gemäß mindestens einem der Ansprüche 1 bis 19 zum Beschichten von Textilien, Tapeten oder Bodenbelägen.

23. Verwendung einer Plastisolzusammensetzung gemäß mindestens einem der Ansprüche 1 bis 19 zur Ummantelung von Scheiben insbesondere für den Automobilbau.

24. Verwendung einer Plastisolzusammensetzung gemäß mindestens einem der Ansprüche 1 bis 19 zur Herstellung von Bodenbelägen.

## Claims

1. A polyvinyl-chloride-free plastisol composition based on plasticizers, fillers and styrene copolymers containing
a) styrene and/or α-methyl styrene and/or p-methyl styrene and
b) 3 to 20% by weight (based on the copolymer) of methacrylic acid and/or acrylic acid and/or itaconic acid,
c) optionally other crosslinking comonomers,
**characterized in that** the maximum of the molecular weight distribution of the copolymer, as determined by gel permeation chromatography, is greater than 1 million.

2. A plastisol composition as claimed in claim 1, **characterized in that** the styrene component a) of the copolymer contains up to 45% by weight (based on the styrene) of butadiene, isoprene, piperylene and/or another rubber-forming comonomer.

3. A plastisol composition as claimed in claim 1 or 2, **characterized in that** part of the comonomer component b) is replaced by methyl (meth)methacrylate or (meth)acrylamide.

4. A plastisol composition as claimed in any of claims 1 to 3, **characterized in that** the percentage content of comonomer component b) in the styrene copolymer is 5 to 10% by weight (based on the copolymer).

5. A plastisol composition as claimed in any of claims 1 to 4, **characterized in that** the copolymer is present in the form of a powder with an average primary particle size of 0.3 to 1.5 µm and an average secondary particle size of less than 100 µm.

6. A plastisol composition as claimed in any of claims 1 to 5, **characterized in that** the copolymer has a core/ shell structure in which most of the polar groups are on the outside.

7. A plastisol composition as claimed in at least one of claims 1 to 6, **characterized in that** the copolymer contains a crosslinking comonomer.

8. A plastisol composition as claimed in claim 7, **characterized in that** the percentage content of the crosslinking comonomer is 0.5 to 10% by weight and preferably 1 to 5% by weight, based on the copolymer.

9. A plastisol composition as claimed in at least one of claims 1 to 8, **characterized in that** an initiator system of hydrogen peroxide and isoascorbic acid is used for the production of the copolymer.

10. A plastisol composition as claimed in any of claims 1 to 9, **characterized in that** it additionally contains a compound which enters into a crosslinking reaction with the copolymer at the gelation temperature.

11. A plastisol composition as claimed in claim 10, **characterized in that** it contains long-chain epoxy compounds, epoxidized polybutadienes or dihydroxyfunctional or polyhydroxyfunctional polyethylene and/or polypropylene glycols or copolymers thereof or hydroxyfunctional polybutadienes as the compound crosslinking with carboxyl groups.

12. A plastisol composition as claimed in claim 10, **characterized in that** it additionally contains at least one compound which enters into a crosslinking reaction with the crosslinking comonomer at the gelation temperature of the plastisol.

13. A plastisol composition as claimed in claims 7, 8, 11 or 12, **characterized in that** it additionally contains a catalyst for the crosslinking reaction.

14. A plastisol composition as claimed in claim 13, **characterized in that** it contains optionally substituted imidazoles, tertiary amines, tetramethylenediamine, urea derivatives, alkyl benzene sulfonic acids or titanates or organotin compounds as catalyst.

15. A plastisol composition as claimed in claim 7 or 8, **characterized in that** the copolymer contains as crosslinking comonomer a functional monomer which, in addition to an olefinically unsaturated double bond, contains an epoxy group, an isocyanate group, a blocked isocyanate group or a hydroxyl group as an additional functional group and in that the plastisol contains diamines or polyamines, diaminoamides or polyaminoamides, dicarboxylic or polycarboxylic acids, dimercapto or polymercapto compounds or diisocyanates or polyisocyanates, optionally in blocked or microencapsulated form, as compounds crosslinking with the additional functional groups.

16. A plastisol composition as claimed in any of claims 1 to 15, **characterized in that** it additionally contains - dissolved in the plasticizer - polyurethane formers in the form of isocyanate prepolymers and (cyclo)aliphatic diamines which react to form a polyurethane at the gelation temperature in a small quantity in relation to the copolymer.

17. A plastisol composition as claimed in claim 16, **characterized in that** it contains isocyanates with blocked isocyanate groups.

18. A plastisol composition as claimed in any of claims 15 to 17, **characterized in that** it contains the isocyanate prepolymers in a quantity of up to 30% by weight of the formulation as a whole and the (cyclo)aliphatic diamines in a quantity of up to 5% by weight in the case of low molecular weight amines (molecular weight up to about 500) and in a quantity of up to 30 % by weight of the formulation as a whole in the case of relatively high molecular weight diamines.

19. A plastisol composition as claimed in any of claims 1 to 18, **characterized in that** it contains up to 700 parts of inert fillers and/or other additives typically encountered in plastisols to 100 parts of the copolymer.

20. The use of the plastisol composition claimed in any of claims 1 to 19 in the automotive industry as an undersealing compound, as an adhesive for bonnet lining materials, as a sill protection compound, as a metal adhesive or as a spot welding paste.

21. The of the plastisol composition claimed in any of claims 1 to 19 in the packaging industry as a sealing compound for container closures or as a seam sealing compound or as a flanged seam adhesive for tin cans.

22. The use of the plastisol composition claimed at in at least one of claims 1 to 19 for the coating of textiles, wall coverings or floor coverings.

23. The use of the plastisol composition claimed in at least one of claims 1 to 19 for the protective covering of glass, more particularly for car manufacture.

24. The use of the plastisol composition claimed in at least one of claims 1 to 19 for the production of floor coverings.

## Revendications

1. Composition de plastisol exempte de chlorure de polyvinyle, à base de plastifiants, de matières de charge et de copolymères du styrène, contenant
a) du styrène et/ou de l'α-méthylstyrène et/ou du p-méthylstyrène, et
b) à concurrence de 3 à 20% en poids (rapportés au copolymère), de l'acide méthacrylique et/ou de l'acide acrylique et/ou de l'acide itaconique,
c) le cas échéant, d'autres comonomères ayant un effet de réticulation,
caractérisée en ce que le maximum de la distribution du poids moléculaire du copolymère, déterminé via chromatographie par perméation du gel, est supérieur à 1.000.000.

2. Composition de plastisol selon la revendication 1, caractérisée en ce que le composant de styrène a) du copolymère contient jusqu'à concurrence de 45% en poids (rapportés au styrène) du butadiène, de l'isoprène, du pipérylène et/ou un autre comonomère formant du caoutchouc.

3. Composition de plastisol selon la revendication 1 ou 2, caractérisée en ce qu'on remplace une partie du composant de comonomère b) par du (méth)acrylate de méthyle ou par du (méth)acrylamide.

4. Composition de plastisol selon l'une quelconque des revendications 1 à 3, caractérisée en ce que la fraction du composant de comonomère b) dans le copolymère de styrène représente de 5 à 10% en poids (rapportés au copolymère).

5. Composition de plastisol selon l'une quelconque des revendications 1 à 4, caractérisée en ce que le copolymère est présent sous forme de poudre dont la granulométrie primaire moyenne s'élève de 0,3 à 1,5 µm et dont la granulométrie secondaire moyenne est inférieure à 100 µm.

6. Composition de plastisol selon l'une quelconque des revendications 1 à 5, caractérisée en ce que le polymère présente une structure du type à noyau/enveloppe dans laquelle les groupes polaires sont disposés essentiellement à l'extérieur.

7. Composition de plastisol selon au moins une quelconque des revendications 1 à 6, caractérisée en ce que le copolymère contient un comonomère ayant un effet de réticulation.

8. Composition de plastisol selon la revendication 7, caractérisée en ce que la fraction du comonomère ayant un effet de réticulation représente de 0,5 à 10% en poids, de préférence de 1 à 5% en poids rapportés au copolymère.

9. Composition de plastisol selon au moins une quelconque des revendications 1 à 8, caractérisée en ce qu'on utilise, pour la préparation du copolymère, un système d'initiateur constitué par le peroxyde d'hydrogène et par l'acide isoascorbique.

10. Composition de plastisol selon l'une quelconque des revendications 1 à 9, caractérisée en ce qu'elle contient en outre un composé réagissant par réticulation avec le copolymère à la température de gélification.

11. Composition de plastisol selon la revendication 10, caractérisée en ce qu'elle contient, à titre de composé ayant un effet de réticulation avec des groupes carboxyle, des composés époxy à longues chaînes, des polybutadiènes époxydés ou encore des polyéthylène- et/ou polypropylèneglycols di- ou polyhydroxyfonctionnels ou leurs copolymères ou encore des polybutadiènes hydroxyfonctionnels.

12. Composition de plastisol selon la revendication 10, caractérisée en ce qu'elle contient en outre au moins un composé qui réagit à la température de gélification du plastisol par réticulation avec le comonomère ayant un effet de réticulation.

13. Composition de plastisol selon les revendications 7, 8, 11, ou 12, caractérisée en ce qu'elle contient en outre un catalyseur pour la réaction de réticulation.

14. Composition de plastisol selon la revendication 13, caractérisée en ce qu'elle contient, à titre de catalyseurs, des imidazoles éventuellement substitués, des amines tertiaires, la tétraméthylènediamine, des dérivés d'urée, des acides alkylbenzènesulfoniques ou des titanates ou encore des composés d'étain organiques.

15. Composition de plastisol selon l'une quelconque des revendications 7 ou 8, caractérisée en ce que le copolymère contient, à titre de comonomère ayant un effet de réticulation, un monomère fonctionnel qui contient, outre une liaison double à insaturation oléfinique, à titre de groupe fonctionnel supplémentaire, un groupe époxy, un groupe isocyanate, un groupe isocyanate bloqué ou un groupe hydroxyle, et en ce que le plastisol contient, à titre de composés ayant un effet de réticulation avec les groupes fonctionnels supplémentaires, des di- ou polyamines, des di- ou polyaminoamides, des acides di- ou polycarboxyliques, des composés di- ou polymercapto ou encore des di- ou polyisocyanates éventuellement sous forme bloquée ou sous forme microencapsulée.

16. Composition de plastisol selon l'une quelconque des revendications 1 à 15, caractérisée en ce qu'elle contient en outre, dissoute dans le plastifiant, une quantité inférieure par rapport à celle du copolymère, de formateurs de polyuréthanne sous forme de prépolymères d'isocyanates et des diamines (cyclo)aliphatiques qui réagissent en formant du polyuréthanne à la température de gélification.

17. Composition de plastisol selon la revendication 16, caractérisée en ce qu'elle contient des isocyanates contenant des groupes isocyanates bloqués.

18. Composition de plastisol selon l'une quelconque des revendications 15 à 17, caractérisée en ce qu'elle contient les prépolymères d'isocyanates en une quantité qui représente jusqu'à 30% en poids de la formulation totale et les diamines (cyclo)aliphatiques dans le cas d'amines à bas poids moléculaires (dont le poids moléculaire s'élève jusqu'à environ 500) en une quantité représentant jusqu'à 5% en poids et dans le cas de diamines à poids moléculaires plus élevés en une quantité représentant jusqu'à 30% en poids de la formulation totale.

19. Composition de plastisol selon l'une quelconque des revendications 1 à 18, caractérisée en ce qu'elle contient, pour 100 parties du copolymère, jusqu'à 700 parties de matières de charge inertes et/ou d'autres additifs habituels dans des plastisols.

20. Utilisation d'une composition de plastisol selon l'une quelconque des revendications 1 à 19, dans la construction automobile sous forme d'agent de protection de dessous de caisse, sous forme d'adhésif pour le revêtement interne de capots, sous forme de matière pour la protection des pédales, sous forme d'adhésif pour les métaux ou encore sous forme de pâte pour la soudure par points.

21. Utilisation d'une composition de plastisol selon l'une quelconque des revendications 1 à 19, dans l'industrie de l'emballage sous forme de matière d'étanchéification pour la fermeture hermétique de récipients ou encore sous forme de matière d'étanchéification des joints ou encore sous forme d'adhésif pour des bords bridés, destiné à des boîtes en fer-blanc.

22. Utilisation d'une composition de plastisol selon au moins une quelconque des revendications 1 à 19, pour l'enduction de textiles, de tapis ou de revêtements de sols.

23. Utilisation d'une composition de plastisol selon au moins une quelconque des revendications 1 à 19, pour l'encadrement de vitres, en particulier pour la construction automobile.

24. Utilisation d'une composition de plastisol selon au moins une quelconque des revendications 1 à 19, pour la fabrication de revêtements de sols.
